**Europäisches Patentamt**

(19) **European Patent Office**

**Office européen des brevets**

(11) Veröffentlichungsnummer: **0 128 421**
A2

(12) # EUROPÄISCHE PATENTANMELDUNG

(21) Anmeldenummer: **84105913.2**

(51) Int. Cl.³: **B 29 H 5/24**, B 29 H 5/02

(22) Anmeldetag: **24.05.84**

(30) Priorität: **10.06.83 DE 3320963**

(43) Veröffentlichungstag der Anmeldung: **19.12.84**
**Patentblatt 84/51**

(84) Benannte Vertragsstaaten: **AT BE FR GB IT NL SE**

(71) Anmelder: **Continental Gummi-Werke Aktiengesellschaft, Königsworther Platz 1, D-3000 Hannover 1 (DE)**
Anmelder: **Fried. Krupp Gesellschaft mit beschränkter Haftung, Altendorfer Strasse 103, D-4300 Essen 1 (DE)**

(72) Erfinder: **Rümmler, Karl-Heinz, Bussillatweg 29, D-3000 Hannover 21 (DE)**
Erfinder: **Sievers, Willi, Kölner Strasse 4, D-3540 Korbach (DE)**
Erfinder: **Dette, Karl-Henning, Schulstrasse 16, D-2091 Wulfsen (DE)**
Erfinder: **Köster, Lothar, Dr., Wilh.-Lehmbruck-Strasse 15, D-2000 Hamburg 74 (DE)**
Erfinder: **Luscalu, Romeo, Schwalbenweg 3, D-2150 Buxtehude (DE)**

(74) Vertreter: **Dehmer, Walter, Dipl.-Ing., Altendorfer Strasse 103, D-4300 Essen 1 (DE)**

(54) **Verfahren und Vorrichtung zum Vulkanisieren von Luftreifen.**

(57) Zum Vulkanisieren von Luftreifen werden die Reifenrohlinge in mit Vulkanisationsformen ausgestatteten Pressen über eine bestimmte Zeit mittels eines Heizmediums ausvulkanisiert.

Damit die Vulkanisationszeit nicht mehr fest eingestellt und demzufolge in vielen Fällen vorsorglich länger als erforderlich gewählt werden muß, soll die jeweils in den Reifenrohling eingebrachte Wärmemenge ermittelt und der Vulkanisationsvorgang beendet werden, sobald die erforderliche Vulkanisations-Gesamtwärmemenge erreicht ist. Dazu werden in zeitlichen Abständen die Temperaturen an der Vulkanisationsform, an den Heizmedienleitungen für den Hohlraum des Reifenrohlings sowie die Rohlingsanfangstemperatur gemessen, daraus anhand von durch Versuchsheizungen ermittelten, für den betreffenden Vulkanisationsvorgang charakteristischen Temperaturverläufen — beispielsweise mittels einer Rechnersteuerung — die in den Reifenrohling eingebrachte Wärmemenge ermittelt und davon abhängig die Heizzeit gesteuert.

Zur Anwendung kommen können unterschiedlich ausgebildete Vulkanisationsformen, die mit und ohne Heizbalg arbeiten, insbesondere mittengeteilte Vulkanisationsformen mit oberer und unterer Halbschale bzw. Vulkanisationsformen, die aus Formsegmenten und Formseitenteilen aufgebaut sind.

0128421

CONTINENTAL GUMMI-WERKE AG, HANNOVER
und FRIED. KRUPP GMBH, ESSEN

Verfahren und Vorrichtung zum Vulkanisieren von
Luftreifen

Die Erfindung bezieht sich auf das Vulkanisieren von
Luftreifen in einer Presse mit einer die Außenkontur
des Luftreifens bestimmenden Vulkanisationsform und
auf eine derartige Presse zur Durchführung des Verfahrens.

Üblicherweise wird die Vulkanisationsdauer von Reifenrohlingen in Pressen mit Vulkanisationsformen durch
Zeituhren mit fest eingestellten Heizzeiten gesteuert.
Während des Betriebes der Presse auftretende Schwankungen der Betriebsbedingungen, beispielsweise Temperaturschwankungen bei dem für die Heizung verwendeten Heizmedium (insbesondere Heizdampf, Heizwasser oder Heizgas),
werden dabei nicht erfaßt. Die Möglichkeit solcher
Schwankungen wird durch Sicherheitszuschläge bei der
Heizzeit berücksichtigt, um eine Unterheizung und damit
eine nicht vollständige Vulkanisation des Reifenrohlings
auf jeden Fall zu vermeiden. Diese Vorgehensweise hat
aber nicht selten eine überflüssige oder sogar qualitätsmindernde Überheizung zur Folge.
Eine direkte Messung der während des Vulkanisationsvorgangs im Reifenrohling auftretenden Temperaturen, beispielsweise durch in den Reifenrohling eingebrachte Temperaturfühler, hat sich wegen erheblicher Störanfälligkeit infolge der auftretenden mechanischen Beanspruchungen, beispielsweise beim Schließen der

0128421

Presse und dem Ausbrechen des Reifens nach seiner Fertigstellung, als nicht anwendbar erwiesen.

Die Aufgabe der vorliegenden Erfindung besteht darin, auf einfachem Wege und mit ausreichender Betriebssicherheit Über- und Unterheizungen beim Vulkanisationsvorgang zu vermeiden und die Heizzeit der Presse so zu steuern, daß der Vulkanisationsvorgang unter Berücksichtigung der jeweils vorliegenden Betriebsbedingungen optimal abläuft.

Zur Lösung der gestellten Aufgabe wird der Vorschlag unterbreitet, während des Vulkanisationsvorgangs in zeitlichen Abständen von 1 bis 40 Sek., vorteilhaft von 1 bis 10 Sek. (Anspruch 2), die in die Vulkanisationsform und die in den Hohlraum des Reifenrohlings eingeleiteten Wärmemengen ausgehend von Temperaturmessungen an der Vulkanisationsform und an den Heizmedienleitungen für den Hohlraum des Reifenrohlings sowie einer Messung der Rohlingsanfangstemperatur zu bestimmen, laufend aufzuaddieren und mit einer vorgegebenen, für eine vollständige Vulkanisation des gesamten Reifenrohlings ausreichenden Gesamtwärmemenge vergleichen; nach Erreichen des vorgegebenen Wertes der erforderlichen Vulkanisations-Gesamtwärmemenge wird der Vulkanisationsvorgang beendet (Anspruch 1). Auf diese Weise wird unter Rückgriff und Auswertung von Temperaturmessungen erreicht, daß einerseits die vollständige Vulkanisation des Reifenrohlings gewährleistet ist, andererseits aber auch überflüssige, gegebenenfalls schädliche Heizzeiten entfallen. Das Ausbringen der Presse wird demzufolge bei einwandfreier Fertigungsqualität gesteigert.

Die Temperaturmessungen an der Vulkanisationsform können zur Unterdrückung in den Formbestandteilen entstehender Wärmeverluste in der Weise ermöglicht werden, daß die betreffenden Temperaturwerte von Temperaturmeßgebern übermittelt werden, die in der Nähe der dem Reifenrohling zugewandten Oberfläche der Formbestandteile in diese eingesetzt sind. Bei der Verarbeitung dieser Temperaturwerte sind dann lediglich noch die an den Kontaktflächen zwischen der Formoberfläche und dem Reifenrohling auftretenden Wärmeverluste anhand empirisch ermittelter Abhängigkeiten zu berücksichtigen.

Vorzugsweise wird das Verfahren in der Weise ausgeführt, daß die in die Vulkanisationsform und die in den Hohlraum des Reifenrohlings eingeleiteten Wärmemengen über eine Messung der jeweiligen Heizmedientemperaturen ermittelt werden (Anspruch 4). Der Vorteil dieser Vorgehensweise besteht darin, daß nur noch der Vulkanisationsform und dem Hohlraum des Reifenrohlings zugeordnete Heizmedientemperaturen zu ermitteln und aufzuaddieren sind und daß die Temperaturmessung jeweils in einem Bereich außerhalb der Vulkanisationsform selbst erfolgen kann. Gemessen werden bei dem Verfahren sowohl die Heizmedieneintritts- als auch die Heizmedienaustrittstemperaturen. Während die Ermittlung der eingeleiteten Wärmemengen über die Heizmedieneintrittstemperaturen erfolgt, dienen die Meßwerte der Heizmedienaustrittstemperaturen zur Überwachung des erfindungsgemäßen Verfahrens.

Als maßgebend für die optimale Vulkanisationszeit wird die für eine vollständige Vulkanisation des gesamten Reifenrohlings ausreichende Gesamtwärmemenge für jeden durch seine geometrische Form und seine Materialzusammensetzung bestimmten Reifentyp durch Ermittlung der bis zur vollständigen Vulkanisation der zuletzt ausvulkanisierenden Stelle, das heißt kritischen Stelle, dieses Reifentyps erforderlichen Gesamtwärmemenge festgelegt (Anspruch 5). Diese Festlegung erfolgt aufgrund der Erkenntnis, daß die einzelnen Bereiche eines Reifenrohlings durch die Beheizung während der Vulkanisation unterschiedlich beziehungsweise unterschiedlich schnell aufgeheizt werden. Es genügt daher, bei der Vorgabe der erforderlichen Vulkanisations-Gesamtwärmemenge auf die kritische Stelle des betreffenden Reifenrohlings abzustellen. Diese wird zweckmäßig durch Versuchsheizungen ermittelt (Anspruch 6).

Da nur (in Abhängigkeit von den Betriebsbedingungen unterschiedliche) Anteile der während eines Vulkanisationsvorgangs in die Presse eingebrachten Wärmemenge auf den Reifenrohling übertragen und bei der Vulkanisation wirksam werden, sind die auftretenden Wärmeverluste bei der Steuerung der Heizzeit zu berücksichtigen. Um den dabei maßgebenden Abhängigkeiten und Gesetzmäßigkeiten in vorteilhafter Weise Rechnung zu tragen, wird das erfindungsgemäße Verfahren vorzugsweise so ausgeführt, daß das unter anderem von der Wärmeleitfähigkeit und den Wärmeübergangsverhältnissen der Formkörper sowie der jeweiligen Heizmedientemperatur abhängige Verhältnis zwischen den durch Messung der Heizmedientemperaturen ermittelten und den in den Reifen-rohling eingeleiteten Wärmemengen durch Versuchshei-zungen ermittelt und als für den betreffenden Vulkani-sationsvorgang typische Basisgröße einer Rechnersteue-rung für den Vulkanisationsvorgang eingegeben wird (Anspruch 7). Hierzu dient ein spezielles Datenerfassungs-und -auswertesystem, das in den die Presse steuernden Prozeßrechner integriert ist und welches ein direktes Abspeichern der ermittelten Werte für die weitere Verwendung als Steuergrößen gestattet. Alternativ dazu kann ein separater, mobiler Zusatzrechner,bei dessen Verwendung die ermittelten Werte als Festwerte in den

0128421

Prozeßrechner übertragen werden müssen, eingesetzt werden. Anhand der in dieser Weise ermittelten, auch den Temperaturverlauf im Reifenrohling festlegenden Größen als Basis für die Temperaturbestimmung kann eine Ermittlung der vom Reifenrohling aufgenommenen Wärmemenge als Maß für den bis dahin erreichten Vulkanisationsgrad durch den Rechner zur Steuerung der Presse erfolgen.

Unter "Formkörper" ist dabei die Vulkanisationsform mit oder ohne Zusatzeinrichtungen zur Beheizung des Reifenrohlings von seiner Innenseite her zu verstehen. Falls also beispielsweise eine Vulkanisationsform ohne Heizbalg beziehungsweise vergleichbare Zusatzeinrichtung zur Anwendung kommt, stellt die Vulkanisationsform sowie die Innenseite des Reifenrohlings die Formkörper dar. Im Falle einer Vulkanisationsform - die mit einem Heizbalg oder dergleichen zusammenwirkt - bestehen die Formkörper aus der Vulkanisationsform und dem Heizbalg oder dergleichen.

Zweckmäßigerweise ist das erfindungsgemäße Verfahren so ausgestaltet, daß bei Überschreitung festgelegter Abweichungen von vorgegebenen Heizmedieneintritts- oder -austrittstemperaturen ein Alarmsignal ausgelöst und/oder der Vulkanisationsvorgang unterbrochen wird (Anspruch 8). Auf diese Weise lassen sich während des Vulkanisationsvorgangs auftretende Störungen sofort erkennen und Fehlerzeugnisse von vornherein vermeiden.

Das erfindungsgemäße Verfahren kann bei allen gängigen Vulkanisationsformen Anwendung finden. Diese können insbesondere mittengeteilt sein, das heißt aus einer oberen und unteren Halbschale bestehen, oder sich aus beheizbaren Formsegmenten und mit diesen zusammenwirkenden Formseitenteilen zusammensetzen.

0128421

Das Verfahren ist auch unabhängig davon einsetzbar, ob die in dieser Weise ausgebildeten Vulkanisationsformen mit einem oder ohne Heizbalg arbeiten. Im Falle einer Vulkanisationsform mit beheizbaren Formsegmenten, Formseitenteilen und einem Heizbalg wird das erfindungsgemäße Verfahren vorzugsweise so ausgeführt, daß die von den Formsegmenten, den Formseitenteilen und dem Heizbalg aufgenommenen und in den Reifenrohling eingeleiteten Wärmemengen über zeitlich aufeinanderfolgende Messungen der Heizmedieneintritts- und -austrittstemperaturen an den genannten Bestandteilen der Vulkanisationsform bestimmt werden.

Die zur Durchführung des Verfahrens geeignete Presse ist im wesentlichen dadurch gekennzeichnet, daß in den Heizmedienleitungen für die Vulkanisationsform und den Hohlraum des Reifenrohlings sowie an dessen Aufnahmevorrichtung Temperaturmeßgeber zur Ermittlung der Heizmedieneintritts- und -austrittstemperaturen sowie der Rohlingsanfangstemperatur angeordnet sind (Anspruch 9).
Bei einer Presse, deren aus Formsegmenten und Formseitenteilen zusammengesetzte Vulkanisationsform mit einem Heizbalg ausgestattet ist, sind in entsprechender Weise den Heizmedienleitungen für die drei genannten Bestandteile Temperaturmeßgeber zugeordnet, über welche in der bereits erwähnten Weise die in die Vulkanisationsform und in den Reifenrohling eingeleiteten Wärmemengen bestimmt werden können.

Die Erfindung wird nachfolgend anhand der Zeichnung
beispielhaft erläutert.
Es zeigen:

Fig. 1            stark schematisiert an einer
                  Presse mit zwei Vulkanisations-
                  formen die Lage der Temperatur-
                  meßpunkte zur Ermittlung der
                  Heizmedieneintritts- und -austritts-
                  temperaturen sowie der Rohlings-
                  anfangstemperatur,

Fig. 2, 3 und 4   typische, bei Versuchsheizungen
                  ermittelte Temperaturverläufe.

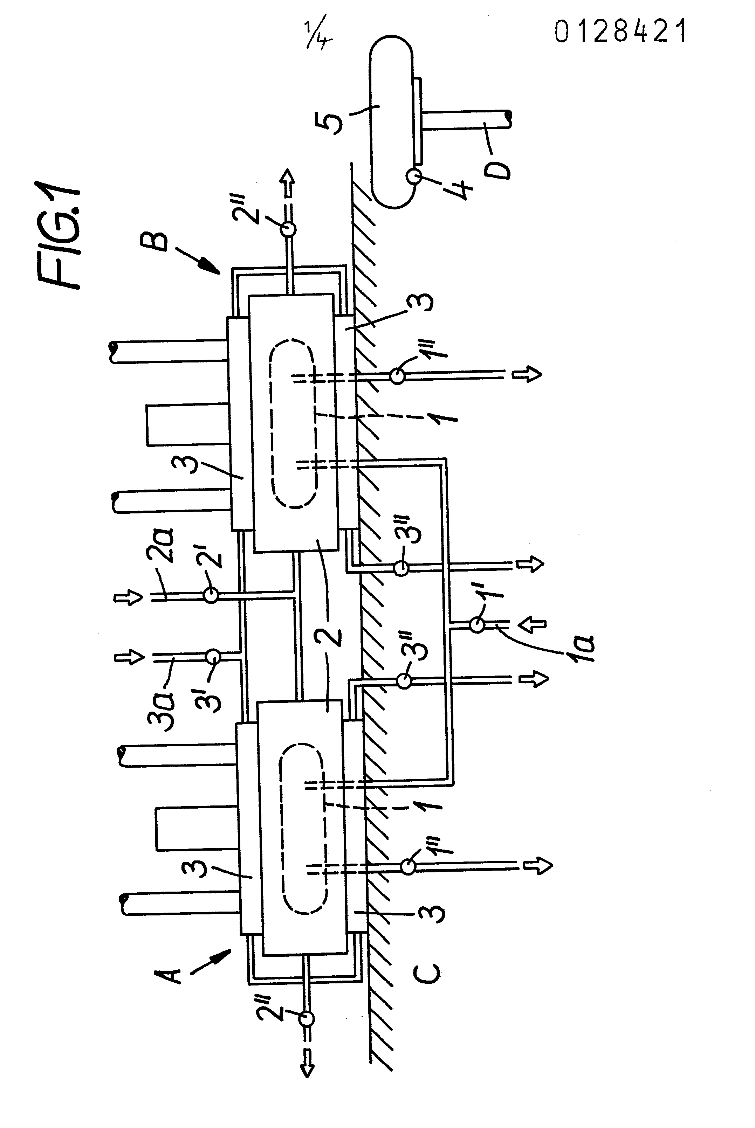

Die in Fig. 1 dargestellte Presse mit zwei Vulkanisationsformen A und B ruht auf einer von Heizleitungen
durchsetzten Unterkonstruktion C.
Mittels einer nicht dargestellten, an sich bekannten
Greifvorrichtung werden die Vulkanisationsformen
abwechselnd von einem Rohlingsstand D her beschickt,
der als Aufnahmevorrichtung für den zu behandelnden
Reifenrohling 5 dient.

Die Vulkanisationsformen A und B bestehen aus Formsegmenten 2 und und zwei Formseitenteilen 3, die
in an sich bekannter Weise die Außenkontur des herzustellenden Luftreifens bestimmen. Die Beheizung des
in der Vulkanisationsform befindlichen Reifenrohlings
von der Innenseite her erfolgt über einen strichpunktiert angedeuteten, mit einem Heizmedium beaufschlagten
Heizbalg 1. Die Versorgung der Bestandteile 1, 2 und 3
mit dem für den Vulkanisationvorgang erforderlichen
Heizmedium erfolgt über Heizmedienleitungen 1a, 2a
bzw. 3a. Diese sind bei der als Doppelheizer ausgebildeten Presse den zugehörigen Vulkanisationsformen A

0128421

und B gleichzeitig zugeordnet.

Die vorgesehenen Meßpunkte für die Rechnersteuerung
zur Ermittlung der in die Vulkanisationsformen mit
den Bestandteilen 1 bis 3 und in den Reifenrohling 5
eingeleiteten Wärmemengen sowie der Rohlingsanfangstemperatur sind

1' = Eintritt Heizdampf in den Heizbalg

1" = Austritt Heizdampf aus dem Heizbalg

2' = Eintritt Formsegmentbeheizung

2" = Austritt Formsegmentbeheizung

3' = Eintritt Formseitenteilbeheizung

3" = Austritt Formseitenteilbeheizung

4 = Temperatur Reifenrohling.

Die in Fig. 1 dargestellte Lage der Temperaturmeßpunkte ist in entsprechender Weise auch auf Pressen
anwendbar, die mit andersartig ausgebildeten Vulkanisationsformen ausgestattet sind; insbesondere ist
das erfindungsgemäße Verfahren auch bei Pressen anwenbar, deren Vulkanisationsformen - aus einer oberen
und unteren Halbschale bestehend - mittengeteilt
sind. Weiterhin ist die Erfindung unabhängig von der
Art und Weise der Innenbeheizung des Reifenrohlings;
sie kann also insbesondere auch ohne Heizbalg ausgeführt werden.

Bei Pressen mit mittengeteilten Vulkanisationsformen
A und B, die ohne Heizbalg arbeiten, sind die in den
Heizmedienleitungen angeordneten Temperaturmeßpunkte
in der beschriebenen Weise derart angeordnet, daß
sie in zeitlichen Abständen fortlaufend die von den
Vulkanisationsformen aufgenommenen und von der Innenseite in den Reifenrohling eingeleiteten Wärmemengen
ermöglichen.

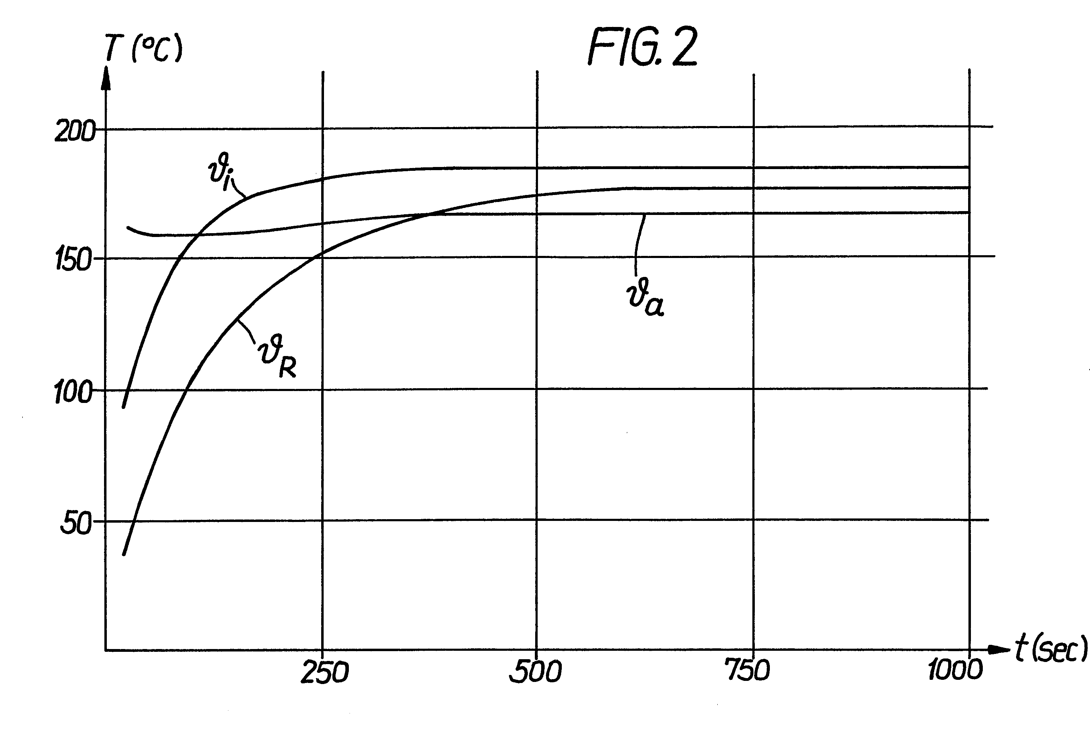

Beispiele für bei Versuchsheizungen ermittelte
Temperaturverläufe im Reifenrohling etwa im Bereich der kritischen Stelle, die während des Vulkanisationsvorgangs den geringsten Temperaturanstieg aufweist, gibt Fig. 2 wieder, und zwar durch die obere gebogene Kurve $\vartheta_i$ für die Rohlingsinnenwand, durch die untere gebogene Kurve $\vartheta_R$ für das Innere des Reifenrohlings und durch die flache Kurve $\vartheta_a$ für die Rohlingsaußenwand.

Die Kurven für die Temperatur der Rohlingsinnenwand und der Rohlingsaußenwand entsprechen dabei zumindest annähernd der Kurve für die Außenwandtemperatur eines etwa zur Anwendung kommenden Heizbalgs bzw. der Kurve für die Temperatur der dem Reifenrohling zugewandten Formenoberfläche.

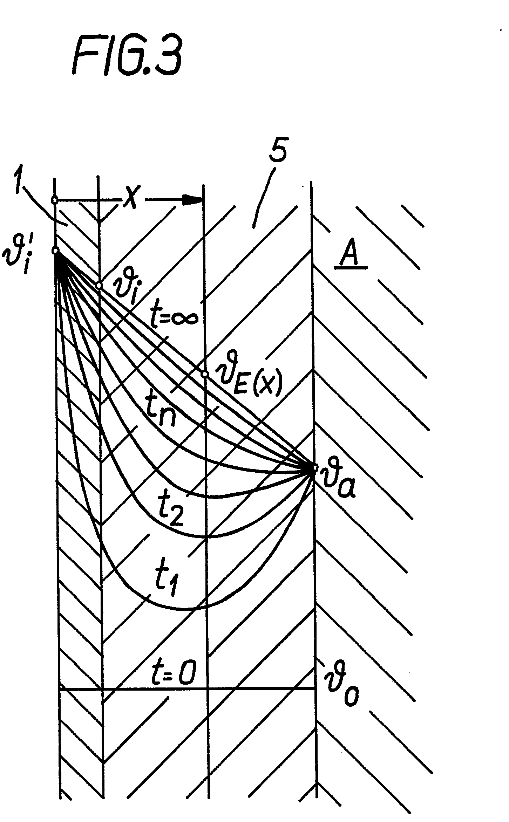

Die in Fig. 3 gezeigte schematische Darstellung des Temperaturverlaufs in der Wand des Reifenrohlings 5 zwischen dem Heizbalg 1 und der zugehörigen Vulkanisationsform (beispielsweise A) erstreckt sich über den Zeitraum vom Beginn eines Vulkanisationsvorgangs, $t = 0$, über einige nachfolgende Zeitpunkte $t_1$, $t_2$, $t_n$ bis zum Beharrungspunkt $t = \infty$.

An besonderen Stellen festgehaltene Temperaturen sind hierbei

$\vartheta_{i'}$ = Innenwandtemperatur Heizbalg

$\vartheta_i$ = Außentemperatur Heizbalg

$\vartheta_a$ = Oberflächentemperatur Vulkanisationsform

$\vartheta_o$ = Anfangstemperatur Reifenrohling

$\vartheta_{E(x)}$ = Beharrungstemperatur im Punkt x.

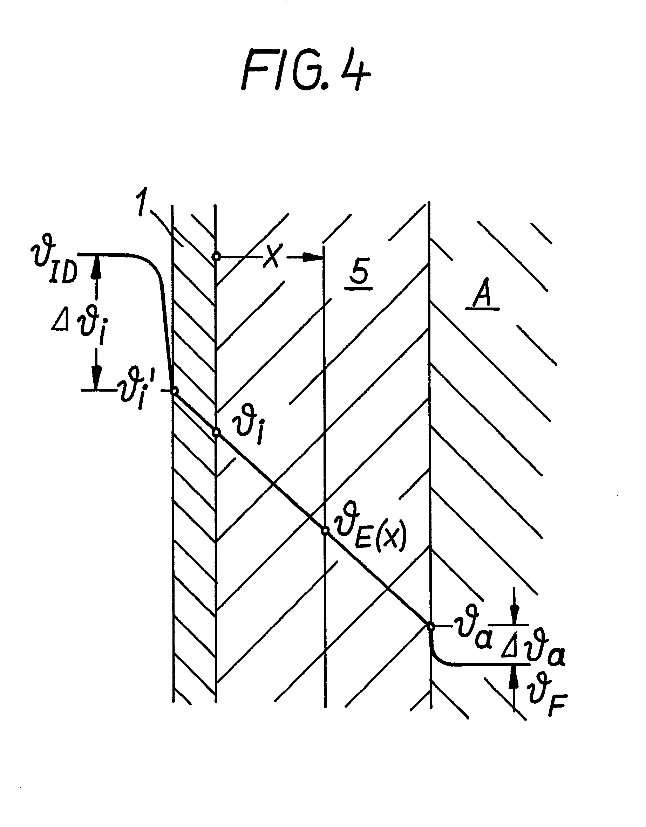

Eine der Fig. 3 entsprechende Darstellung ist in Fig. 4 wiedergegeben, jedoch lediglich als Temperaturgefälle für den Beharrungszustand $t = \infty$.

Die ausgezeichneten Temperaturpunkte sind bezeichnet mit

$\vartheta_{ID}$ = Innendampftemperatur Heizbalg

$\vartheta_{F}$ = Temperatur Vulkanisationsform

$\vartheta_{i'}$ = Innenwandtemperatur Heizbalg

$\vartheta_{i}$ = Außenwandtemperatur Heizbalg

$\vartheta_{a}$ = Oberflächentemperatur Vulkanisationsform

$\vartheta_{E}(x)$ = Beharrungstemperatur im Punkt x (ausgehend von der Innenwand des Reifenrohlings 5 in Richtung auf die zugewandte Oberfläche der Vulkanisationsform A).

Die Temperaturunterschiede zwischen der Heizdampftemperatur im Innenraum des Heizbalgs und dessen Innenwandtemperatur einerseits und zwischen der Oberflächentemperatur der Vulkanisationsform und der Temperatur der Vulkanisationsform andererseits sind mit $\Delta \vartheta_{i}$ bzw. $\Delta \vartheta_{a}$ bezeichnet.

P a t e n t a n s p r ü c h e

1. Verfahren zum Vulkanisieren von Luftreifen in einer Presse mit einer die Außenkontur des Luftreifens bestimmenden Vulkanisationsform, d a d u r c h g e k e n n z e i c h n e t, daß während des Vulkanisationsvorgangs in zeitlichen Abständen von 1 bis 40 Sek. die in die Vulkanisationsform und die in den Hohlraum des Reifenrohlings eingeleiteten Wärmemengen ausgehend von Temperaturmessungen an der Vulkanisationsform und an den Heizmedienleitungen für den Hohlraum des Reifenrohlings sowie einer Messung der Rohlingsanfangstemperatur bestimmt, laufend aufaddiert und mit einer vorgegebenen, für eine vollständige Vulkanisation des gesamten Reifenrohlings ausreichenden Gesamtwärmemenge verglichen werden und daß nach Erreichen der Gesamtwärmemenge der Vulkanisationsvorgang beendet wird.

2. Verfahren nach Anspruch 1, dadurch gekennzeichnet, daß die in Vulkanisationsform und in den Reifenrohling eingeleiteten Wärmemengen in zeitlichen Abständen zwischen 1 bis 10 Sek. bestimmt, laufend aufaddiert und mit der erforderlichen Vulkanisations-Gesamtwärmemenge verglichen werden.

3. Verfahren nach einem der Ansprüche 1 bis 2, dadurch gekennzeichnet, daß die in die Vulkanisationsform eingeleitete Wärmemenge über eine Messung der Heizmedientemperaturen an der Vulkanisationsform ermittelt wird.

4. Verfahren nach einem der Ansprüche 1 bis 3, dadurch gekennzeichnet, daß die in die Vulkanisationsform und die in den Hohlraum des Reifenrohlings eingeleiteten Wärmemengen über eine Messung der jeweiligen Heizmedientemperaturen ermittelt werden.

5. Verfahren nach einem der Ansprüche 1 bis 4, dadurch gekennzeichnet, daß die erforderliche Vulkanisations-Gesamtwärmemenge für jeden durch seine geometrische Form und seine Materialzusammensetzung bestimmten Reifentyp durch Ermittlung der bis zur vollständigen Vulkanisation der zuletzt ausvulkanisierenden - kritischen - Stelle dieses Reifentyps erforderlichen Gesamtwärmemenge festgelegt wird.

6. Verfahren nach Anspruch 5, dadurch gekennzeichnet, daß die kritische Stelle eines jeden Reifentyps durch Versuchsheizungen ermittelt wird.

7. Verfahren nach einem der vorhergehenden Ansprüche, dadurch gekennzeichnet, daß das unter anderem von der Wärmeleitfähigkeit und den Wärmeübergangsverhältnissen der Formkörper sowie der jeweiligen Heizmedientemperatur abhängige Verhältnis zwischen den durch Messung der Heizmedientemperaturen ermittelten und den in den Reifenrohling eingeleiteten Wärmemengen durch Versuchsheizungen ermittelt und als für den betreffenden Vulkanisationsvorgang typische veränderliche Basisgröße einer Rechnersteuerung für den Vulkanisationsvorgang eingegeben wird.

8. Verfahren nach einem der vorhergehenden Ansprüche, dadurch gekennzeichnet, daß bei Überschreitung festgelegter Abweichungen von vorgegebenen Heizmedieneintritts- oder -austrittstemperaturen ein Alarmsignal ausgelöst und/oder der Vulkanisationsvorgang unterbrochen wird.

9. Presse zum Vulkanisieren von Luftreifen, mit einer deren Außenkontur bestimmenden Vulkanisationsform, nach einem der Ansprüche 1 bis 8, dadurch gekennzeichnet, daß in den Heizmedienleitungen (2a, 3a; 1a) für die Vulkanisationsform (A bzw. B) und den Hohlraum des Reifenrohlings (5) sowie an dessen Aufnahmevorrichtung (D) Temperaturmeßgeber (2', 2"; 3' 3"; 1', 1"; 4) zur Ermittlung der Heizmedieneintritts- und -austrittstemperaturen sowie der Rohlingsanfangstemperatur angeordnet sind.

FIG.1

¼

0128421

FIG. 2

# FIG.3

# FIG. 4